# EUROPEAN PATENT APPLICATION

(11) **EP 4 726 884 A2**
(43) Date of publication of application: **15.04.2026**
(21) Application number: 26161343.4
(22) Date of filing: 14.07.2023
(51) Int. Cl.: H01M 50/211

(54) **BATTERY MODULE AND BATTERY PACK AND VEHICLE COMPRISING THE SAME**

(30) Priority: 14.07.2022 KR 20220086987
(62) Divisional of application: 23840017.0
(71) Applicant: LG Energy Solution, Ltd., Seoul 07335 (KR)
(72) Inventor: JU, Eun-Ah, 34122 DAEJEON (KR); SEO, Sung-Won, 34122 DAEJEON (KR); YUN, Hyeon-Ki, 34122 DAEJEON (KR); TANNENBERGER, Guenter, 85123 POBENHAUSEN (DE); HARASZTOSI, Uwe, 74172 NECKARSULM (DE)
(74) Representative: Plasseraud IP

(57) **Abstract**

A battery module according to an embodiment of the present disclosure includes a cell assembly including a plurality of battery cells, and a frame assembly covering at least one side of the cell assembly, and configured to guide direct connection between electrode leads of adjacent battery cells.

## Description

### TECHNICAL FIELD

The present disclosure relates to a battery module, and a battery pack and a vehicle comprising the same, and more particularly, to a battery module with lower manufacturing cost and higher energy density, and a battery pack and a vehicle comprising the same.

The present application claims priority to Korean Patent Application No. 10-2022-0086987 filed on July 14, 2022 in the Republic of Korea, the disclosure of which is incorporated herein by reference.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like. Among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. Additionally, lithium secondary batteries comprise an electrode assembly including a positive electrode plate and a negative electrode plate coated with the positive electrode active material and the negative electrode active material, respectively, with a separator interposed between the positive electrode plate and the negative electrode plate and an outer packaging or a battery case accommodating the electrode assembly together with an electrolyte solution in an airtight manner.

Lithium secondary batteries may be classified into can-type secondary batteries in which the electrode assembly is included in a metal can and pouch-type secondary batteries in which the electrode assembly is included in a pouch of an aluminum laminate sheet according to the shape of the battery case. Additionally, the can-type secondary batteries may be sub-classified into cylindrical batteries and prismatic batteries according to the shape of the metal can.

Here, the pouch of the pouch-type secondary batteries may largely include a lower sheet and an upper sheet disposed on the lower sheet. In this instance, the pouch accommodates the electrode assembly including the positive electrode, the negative electrode and the separator stacked and wound. Additionally, after the electrode assembly is received, the upper sheet and the lower sheet are sealed along the edges by heat welding. Additionally, an electrode tab extending from each electrode may be coupled to an electrode lead, and an insulating film may be attached to an area of contact between the electrode lead and the sealing portion.

The pouch-type secondary batteries may be so flexible that they may be formed in various shapes. Additionally, the pouch-type secondary batteries may realize secondary batteries of the same capacity with smaller volume and mass.

To provide high voltage and high current, the lithium secondary batteries are used to manufacture a battery module or a battery pack by stacking or piling up a plurality of battery cells with or without mounting in a cartridge to form a closely packed structure and electrically connecting them.

In general, the battery module includes a cell assembly including the plurality of battery cells and a busbar assembly covering the cell assembly and configured for electrical connection of the plurality of battery cells. Here, the electrode leads of the plurality of battery cells is joined to each other through a busbar of the busbar assembly. That is, the battery module guides the connection of the electrode leads using the busbar when connecting the electrode leads of the battery cells.

However, the battery module structure including the busbar has manufacturing cost and energy density disadvantages caused by the increased manufacturing cost due to the busbar and the increased total weight of the battery module due to the weight of the busbar.

Accordingly, there is a need for an approach to establish electrical connection of the electrode leads of the battery cells with lower manufacturing cost and higher energy density.

### SUMMARY

### Technical Problem

The present disclosure is designed to solve the above-described problem, and therefore the present disclosure is directed to providing a battery module having electrical connection of electrode leads of battery cells with lower manufacturing cost and higher energy density, and a battery pack and a vehicle comprising the same.

The technical problem to be solved by the present disclosure is not limited to the above-described problems, and these and other problems will be clearly understood by those skilled in the art from the following description.

### Technical Solution

To solve the above-described problem, the present disclosure provides a battery module including a cell assembly including a plurality of battery cells; and a frame assembly covering at least one side of the cell assembly, and configured to guide direct connection between electrode leads of adjacent battery cells.

More preferably, the electrode leads of the adjacent battery cells may be directly joined to each other without an additional medium for connection in the frame assembly.

More preferably, the frame assembly may include a main frame covering the at least one side of the cell assembly, and allowing the electrode leads of the battery cells to pass therethrough; and a cover frame covering the main frame, and supporting the electrode leads passing through the main frame.

More preferably, the main frame may include a frame body covering at least one side of the cell assembly; a plurality of lead slots disposed in the frame body, and allowing the electrode leads to pass therethrough; and a plurality of guide spacers disposed in between the plurality of lead slots, and forming a predetermined space in a heightwise direction of the frame body.

More preferably, the plurality of guide spacers may allow insertion of detachable lead joint jigs in the direct connection of the electrode leads of the adjacent battery cells, wherein the lead joint jigs guide the direct connection of the electrode leads.

More preferably, the cover frame may include a cover body covering the main frame; and a plurality of support ribs disposed on an inner surface of the cover body, and supporting the electrode leads of the battery cells passing through the lead slots.

More preferably, the cover frame may include a plurality of protruding ribs formed in the cover body, wherein the protruding ribs are inserted into two end portions of the plurality of guide spacers in the heightwise direction of the cover body.

More preferably, the cover body may be made of an insulation material.

More preferably, the plurality of support ribs may come into surface contact with the joined electrode leads of the battery cells passing through the lead slots.

More preferably, the plurality of support ribs may include a first support portion disposed on the inner surface of the cover body; and a second support portion bending from two end portions of the first support portion and extending to a predetermined length.

More preferably, the first support portion may come into surface contact with the joined electrode leads of the battery cells passing through the lead slots.

The present disclosure further provides a battery pack including at least one battery module according to the previous embodiments; and a pack case accommodating the at least one battery module.

The present disclosure further provides a vehicle comprising at least one battery pack according to the previous embodiment.

### Advantageous Effects

According to the above-described embodiments of the present disclosure, it may be possible to provide the battery module having electrical connection of electrode leads of battery cells with lower manufacturing cost and higher energy density, and the battery pack and the vehicle comprising the same.

Many other additional effects may be achieved by many other embodiments of the present disclosure. These effects of the present disclosure will be described in detail in each embodiment, or description of effects that can be easily understood by those skilled in the art is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram illustrating a battery module according to an embodiment of the present disclosure.
FIG. 2 is a diagram illustrating a frame assembly of the battery module of FIG. 1.
FIG. 3 is a diagram illustrating a main frame of the frame assembly of FIG. 2.
FIGS. 4 and 5 are diagrams illustrating a cover frame of the frame assembly of FIG. 2.
FIG. 6 is a partial cut-away view illustrating connection of electrode leads of battery cells in a frame assembly of the battery module of FIG. 1.
FIG. 7 is a cross-sectional view illustrating connection of electrode leads of battery cells in a frame assembly of the battery module of FIG. 1.
FIG. 8 is a diagram illustrating a cover frame according to another embodiment of the frame assembly of FIG. 2.
FIG. 9 is a diagram illustrating a cover frame according to still another embodiment of the frame assembly of FIG. 2.
FIGS. 10 to 12 are diagrams illustrating a process of joining electrode leads of battery cells of the battery module of FIG. 1.
FIG. 13 is a diagram illustrating a battery pack according to an embodiment of the present disclosure.
FIG. 14 is a diagram illustrating a vehicle according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and the illustrations in the accompanying drawings are an exemplary embodiment of the present disclosure to describe the technical aspect of the present disclosure and are not intended to be limiting, and thus it should be understood that a variety of other equivalents and modifications could have been made thereto at the time that the application was filed.

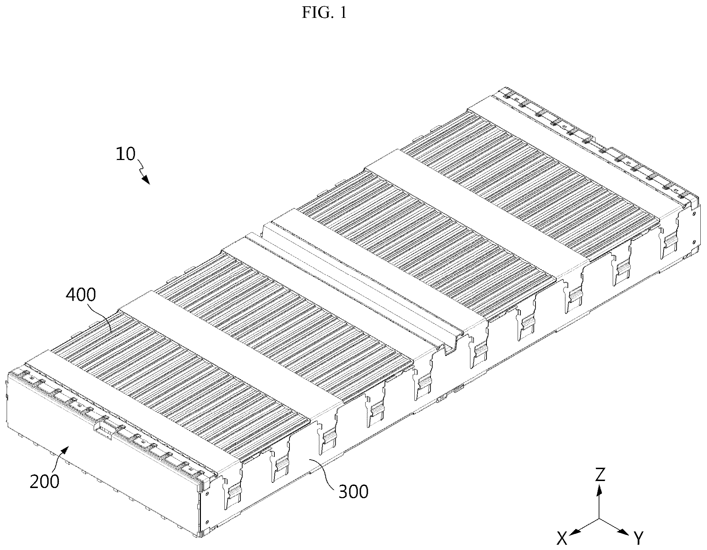

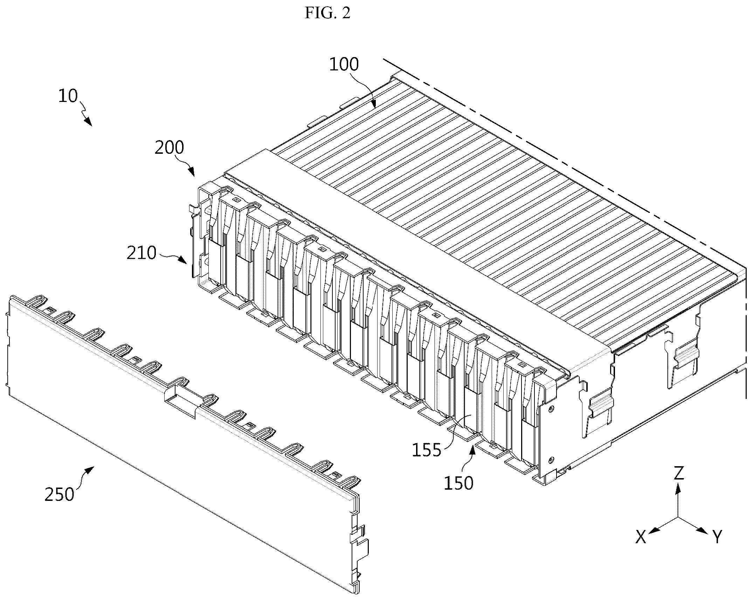

FIG. 1 is a diagram illustrating a battery module 10 according to an embodiment of the present disclosure, and FIG. 2 is a diagram illustrating a frame assembly 200 of the battery module 10 of FIG. 1. Meanwhile, for convenience of description, in FIG. 2, illustration of a top plate 400 of the battery module 10 is omitted.

Referring to FIGS. 1 and 2, the battery module 10 may include a cell assembly 100 and the frame assembly 200.

The cell assembly 100 may include a plurality of battery cells 150. The plurality of battery cells 150 may be secondary batteries, for example, pouch type secondary batteries, prismatic secondary batteries or cylindrical secondary batteries. Hereinafter, in this embodiment, description is made based on secondary batteries, specifically, pouch type secondary batteries as the plurality of battery cells 150.

The plurality of battery cells 150 may be arranged in stack and electrically connected through electrical connection of electrode leads 155.

The frame assembly 200 may be configured to electrically connect the plurality of battery cells 150 of the cell assembly 100, and may cover at least one side of the cell assembly 100. The frame assembly 200 may be configured to guide direct connection between the electrode leads 155 of the adjacent battery cells 150.

In this embodiment, since the frame assembly 200 guides the direct connection between the electrode leads 155 in the electrical connection of the electrode leads 155 of the battery cells 150, it may be possible to eliminate the need for a busbar for additional electrical connection compared to an indirect connection structure using a medium for electrical connection of the electrode leads 155.

Accordingly, in this embodiment, through the omission of the busbar, it may be possible to reduce the total material cost of the battery module and the total weight of the battery module. Furthermore, in this embodiment, due to the absence of the busbar, it may be possible to form a cell space in the lengthwise direction (X axis direction) of the battery module 10, thereby increasing the total energy density of the battery module 10.

Specifically, the adjacent battery cells 150 of the cell assembly 100 may be directly joined to each other without an additional medium for connection in the frame assembly 200. Here, the additional medium may refer to the busbar joined to the electrode leads 155 of the battery cells 150 for electrical connection of the battery cells 150.

In the case of this embodiment, since the electrode leads 155 of the battery cells 150 are electrically connected without the additional medium such as the busbar, the busbar may be removed, so it may be possible to reduce the manufacturing cost of the battery module 10, and reduce the total size or weight of the battery module 10 due to the absence of the busbar in the lengthwise direction (X axis direction) of the battery module 10, thereby significantly increasing the energy density per weight of the battery.

Hereinafter, the frame assembly 200 according to this embodiment will be described in more detail.

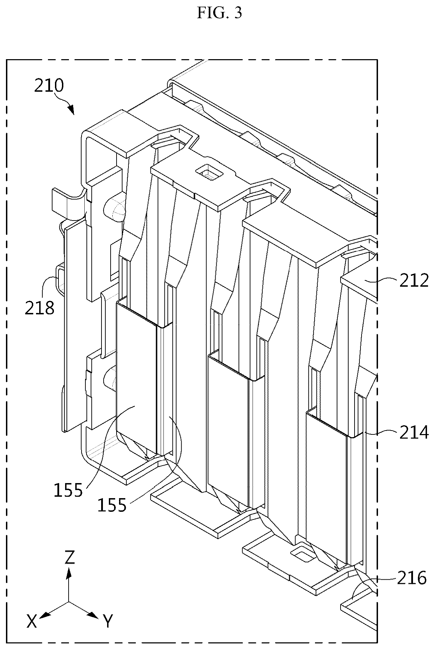

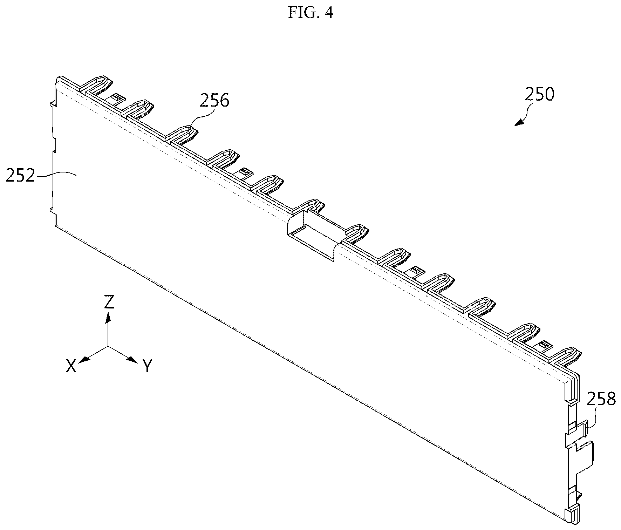

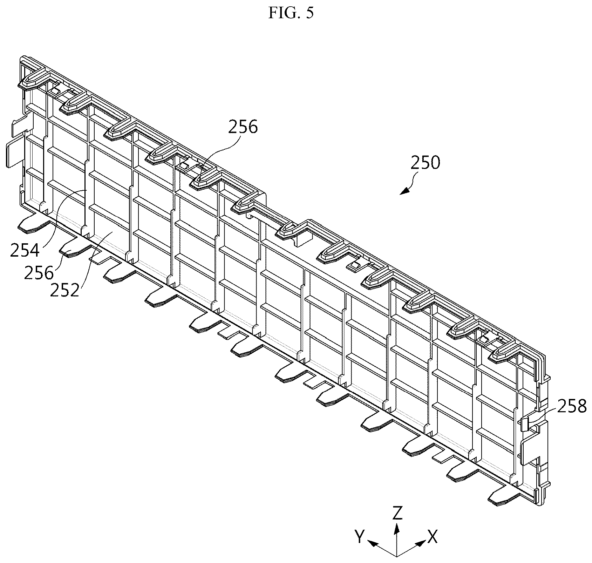

FIG. 3 is a diagram illustrating a main frame 210 of the frame assembly 200 of FIG. 2, and FIGS. 4 and 5 are diagrams illustrating a cover frame 250 of the frame assembly 200 of FIG. 2.

Referring to FIGS. 3 to 5 and FIG. 2, the frame assembly 200 may include the main frame 210 and the cover frame 250.

The main frame 210 may cover at least one side of the cell assembly 100. Specifically, a pair of main frames 210 may be provided to cover two sides of the cell assembly 100 in the front-rear direction (X axis direction).

The main frame 210 may allow the electrode leads 155 of the battery cells 150 to pass therethrough and extend outside of the main frame 210 while covering at least one side of the cell assembly 100.

Hereinafter, the main frame 210 will be described in more detail.

The main frame 210 may include a frame body 212, a lead slot 214 and a guide spacer 216.

The frame body 212 may cover at least one side of the cell assembly 100. Specifically, a pair of frame bodies 212 may be provided to cover the two sides of the cell assembly 100 in the front-rear direction (X axis direction).

The lead slot 214 may be disposed in the frame body 212, and may allow the electrode leads 155 of the battery cells 150 to pass therethrough. A plurality of lead slots 214 may be provided, and may allow each of the electrode leads 155 of the battery cells 150 to extend outside of the frame body 212 therethrough.

A plurality of guide spacers 216 may be provided, and disposed between the plurality of lead slots 214. The plurality of guide spacers 216 may form a predetermined space in the heightwise direction (Z axis direction) of the frame body 212.

The plurality of guide spacers 216 may form an insertion space of a lead joint jig J as described below in the process of joining the electrode leads 155 of the battery cells 150 as described below.

Specifically, when establishing the direct connection between the electrode leads 155 of the adjacent battery cells 150, the plurality of guide spacers 216 may allow the insertion of the detachable lead joint jig J that guides the direct connection of the electrode leads 155. The joining process related to the insertion of the lead joint jig J through the plurality of guide spacers 216 will be described in more detail in the following related description.

The main frame 210 may further include a hook groove 218.

The hook groove 218 may be configured to guide the coupling of the main frame 210 and the cover frame 250 and formed at two end portions in the lengthwise direction (Y axis direction) of the frame body 212, and a pair of hook grooves 218 may be provided. The pair of hook grooves 218 may be hook-fastened to a pair of coupling hooks 258 as described below.

The cover frame 250 may cover the main frame 210 and support the electrode leads 155 passing through the main frame 210. In this embodiment, the cover frame 250 may directly support the electrode leads 155 and cover the electrode leads 155.

Hereinafter, the cover frame 250 according to this embodiment will be described in more detail.

The cover frame 250 may include a cover body 252 and a support rib 254.

The cover body 252 may form an appearance of the frame assembly 200, and may be coupled to the frame body 212 of the main frame 210 to cover the main frame 210.

Through the coupling of the cover body 252 and the frame body 212, the electrode leads 155 of the battery cells 150 electrically connected to each other may be disposed in the frame assembly 200.

The cover body 252 may be made of an insulation material to ensure electrical insulation performance. For example, the cover body 252 may be made of plastics having a predetermined strength.

The support rib 254 may be disposed on the inner surface of the cover body 252. The support rib 254 may be configured to support the connected electrode leads 155 on the inner side of the cover body 252, and may be integrally formed with the cover body 252 or attached to the cover body 252.

Specifically, the support rib 254 may extend to a predetermined length from the inner surface of the cover body 252, and may be disposed facing the connected electrode leads 155 to support the electrode leads 155 of the battery cells 150 passing through the lead slots 214.

A plurality of support ribs 254 may be provided and arranged spaced a predetermined distance apart from each other along the lengthwise direction (Y axis direction) of the cover body 252. The plurality of support ribs 254 may be provided in number corresponding to the pair of connected electrode leads 155.

The cover frame 250 may further include a protruding rib 256.

The protruding rib 256 may be formed at each of upper and lower end portions of the cover body 252, and the plurality of protruding ribs 256 may be arranged spaced a predetermined distance apart from each other at the upper and lower end portions of the cover body 252.

The plurality of protruding ribs 256 may be inserted into two end portions of the plurality of guide spacers 216 in the heightwise direction (Z axis direction) of the cover body 252, i.e., upper and lower end portions of the plurality of guide spacers 216.

When the main frame 210 and the cover frame 250 are coupled to each other, the plurality of protruding ribs 256 may be inserted into the upper and lower end portions of the plurality of guide spacers 216, and thus it may be possible to seal the frame assembly 200 more tightly, thereby further increasing the sealing performance of the frame assembly 200.

The cover frame 250 may further include the coupling hooks 258.

The pair of coupling hooks 258 may be provided and disposed at two end portions in the lengthwise direction (Y axis direction) of the cover body 252. The pair of coupling hooks 258 may be hook-coupled to the pair of hook grooves 218 of the main frame 210, when the main frame 210 and the cover frame 250 are coupled to each other.

In this embodiment, since the coupling of the main frame 210 and the cover frame 250 is achieved through the hook coupling of the pair of coupling hooks 258 and the pair of hook grooves 218, the main frame 210 and the cover frame 250 may be stably coupled without any additional bolting member.

Additionally, in this embodiment, since the main frame 210 and the cover frame 250 are coupled to each other without an additional bolting member, it may be possible to further reduce the manufacturing cost and significantly increase the assembly process efficiency due to the omission of the bolting member.

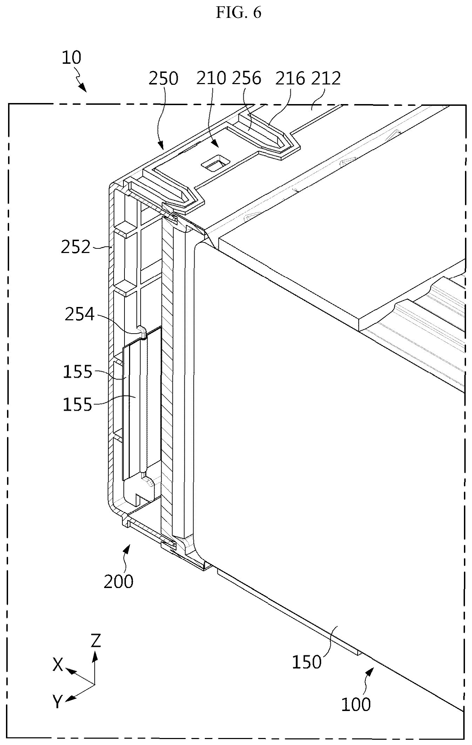

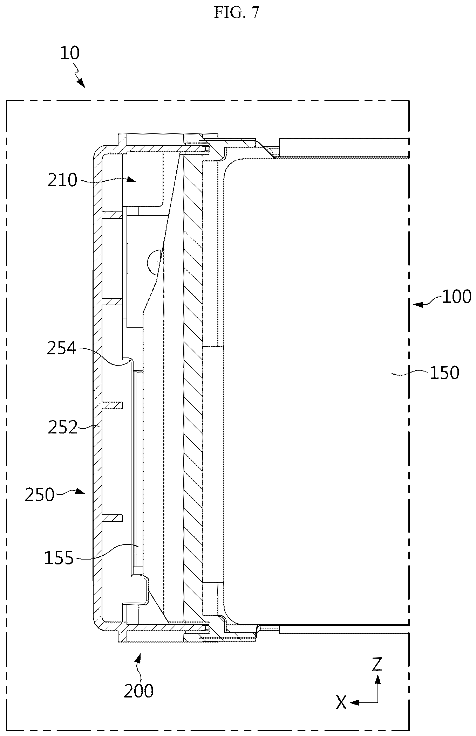

FIG. 6 is a partial cut-away view illustrating the connection of the electrode leads 155 of the battery cells 150 in the frame assembly 200 of the battery module 10 of FIG. 1, and FIG. 7 is a cross-sectional view illustrating the connection of the electrode leads 155 of the battery cells 150 in the frame assembly 200 of the battery module 10 of FIG. 1.

Referring to FIGS. 6 and 7, the electrode leads 155 of the battery cells 150 connected to each other may be supported by the support ribs 254 of the cover frame 250 in the frame assembly 200.

In this instance, the support ribs 254 may contact the electrode leads 155 or press the electrode leads 155 to a predetermined depth to bring into close contact in order to support the electrode leads 155 more stably.

In this embodiment, since the support ribs 254 support the electrode leads 155 in the frame assembly 200, it may be possible to increase the coupling stability of the electrode leads 155 joined to each other.

Furthermore, in this embodiment, since the support ribs 254 are disposed on the inner surface of the cover frame 250, when an event occurs, for example, external impacts from the outside of the frame assembly 200, i.e., the outside of the cover frame 250, the impacts may be first transferred to the support ribs 254, thereby minimizing the impacts that may be applied to the electrode leads 155.

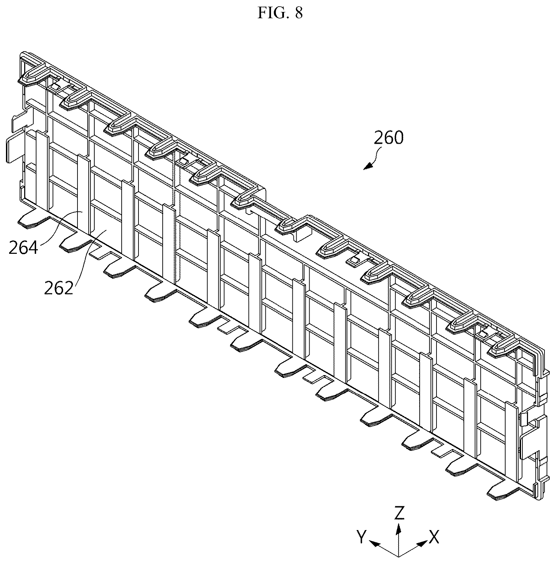

FIG. 8 is a diagram illustrating a cover frame 260 according to another embodiment of the frame assembly 200 of FIG. 2.

The cover frame 260 according to this embodiment is similar to the cover frame 250 of the previous embodiment, and regarding the components that are substantially identical or similar to the previous embodiment, redundant description is omitted, and hereinafter, difference(s) between this embodiment and the previous embodiment will be described.

Referring to FIG. 8, the cover frame 260 may include a cover body 262 and a support rib 264.

A plurality of support ribs 264 may be provided and formed on the inner surface of the cover body 262 and may have an area corresponding to the area of the electrode leads 155 (see FIG. 2) joined to each other. The plurality of support ribs 264 may come into surface contact with the facing electrode leads 155 (see FIG. 2).

In this embodiment, since the support ribs 264 are in surface contact with the electrode leads 155, it may be possible to further ensure the support stability for the electrode leads 155 due to the increased area of contact with the electrode leads 155.

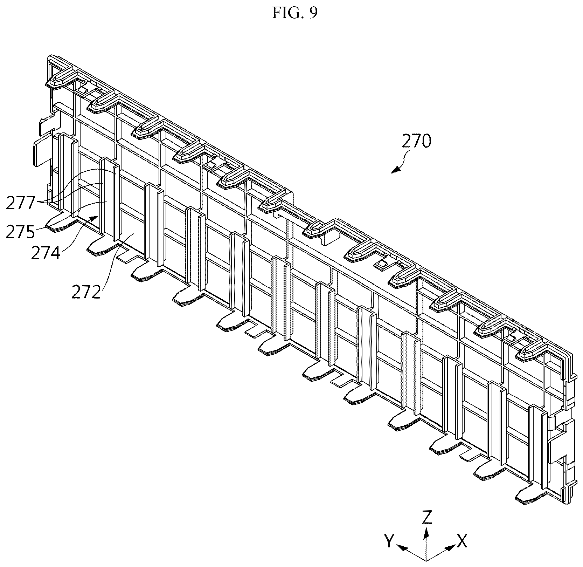

FIG. 9 is a diagram illustrating a cover frame 270 according to still another embodiment of the frame assembly 200 of FIG. 2.

The cover frame 270 according to this embodiment is similar to the cover frame 260 of the previous embodiment, and regarding the components that are substantially identical or similar to the previous embodiment, redundant description is omitted, and hereinafter, difference(s) between this embodiment and the previous embodiment will be described.

Referring to FIG. 9, the cover frame 270 may include a cover body 272 and a support rib 274.

A plurality of support ribs 274 may be provided. Each of the plurality of support ribs 274 may include a first support portion 275 and a second support portion 277.

The first support portion 275 may be formed on the inner surface of the cover body 272 and have an area corresponding to the area of the electrode leads 155 (see FIG. 2) joined to each other so as to come into surface contact with the electrode leads 155.

The second support portion 277 may bend from two end portions of the first support portion 275 and extend to a predetermined length. The second support portion 277 may cover two sides of the joined electrode leads 155 to prevent the electrode leads 155 from moving left and right, thereby effectively preventing damage or misalignment of the electrode leads 155.

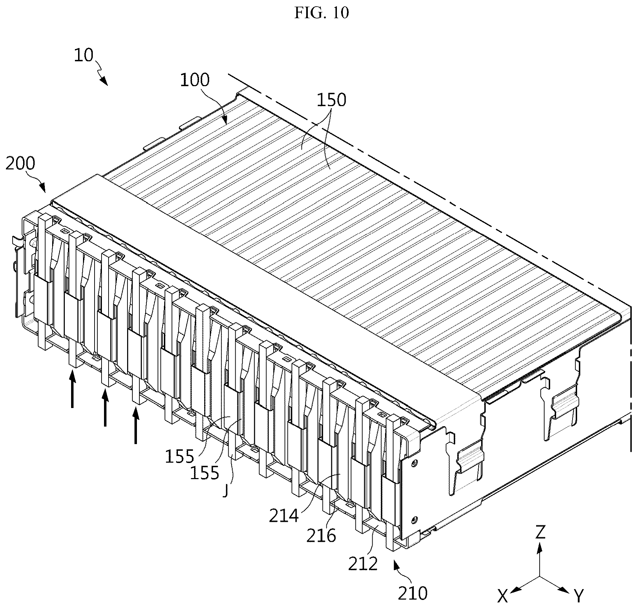

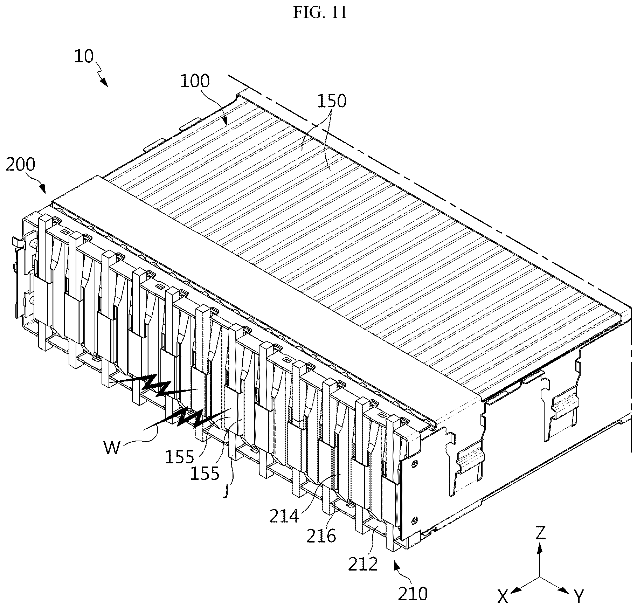

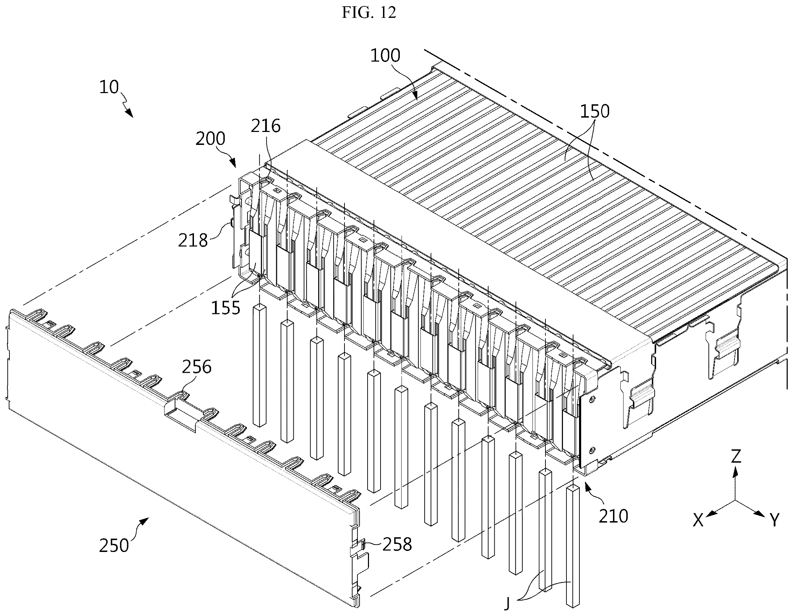

FIGS. 10 to 12 are diagrams illustrating the process of joining the electrode leads 155 of the battery cells 150 of the battery module 10 of FIG. 1. For convenience of description, in FIGS. 10 to 12, illustration of the top plate 400 of the battery module 10 is omitted.

Referring to FIGS. 10 to 12, during the joining process for the electrical connection of the electrode leads 155 of the battery cells 150, the worker may allow the electrode leads 155 of the battery cells 150 to pass through the lead slots 214 of the main frame 210 of the frame assembly 200 and extend outside of the main frame 210. Here, the worker's process may include manual manipulation or automatic manipulation through mechanical equipment.

Subsequently, the worker may place a plurality of lead joint jigs J in the guide spacers 216. Here, the plurality of lead joint jigs J may slide in the up-down direction (Z axis direction) of the main frame 210 and be disposed in the predetermined spaces within the guide spacers 216.

Subsequently, the worker may bend the adjacent electrode leads 155 passing through the lead slots 214 and arrange them in contact with each other to overlap them. In this instance, the lead joint jigs J disposed in the guide spacers 216 may support the electrode leads 155 at the rear of the electrode leads 155, thereby increasing the accuracy in the worker's process of bending or arranging the electrode leads 155 to overlap them, and effectively preventing the risk of damage to the electrode leads 155 during the process.

Subsequently, the overlapping adjacent electrode leads 155 may be joined and electrically connected through a welding process W such as laser welding. In this instance, the lead joint jigs J disposed in the guide spacers 216 may be made of a metal, and support the electrode leads 155 at the rear of the electrode leads 155 during the welding process W, and thus it may be possible to increase the accuracy in the welding process W, and prevent damage or weld quality defects of the electrode leads 155 or the frame body 212 during the process.

In the welding process W such as laser welding, in case where there is a plastic molded product at the rear of the weld surface, the molded product may melt or the weld may be poor, causing weld defects.

In this embodiment, since the lead joint jigs J support the electrode leads 155 on the rear surface of the weld surface within the guide spacers 216 during the welding process W, it may be possible to prevent damage to the electrode leads 155 or the frame body 212 during the welding process W such as laser welding, and significantly increase the weld quality.

When the welding process W between the electrode leads 155 is completed, the worker may slide the lead joint jigs J along the up-down direction (Z axis direction) to move them out of the guide spacers 216 and couple the cover frame 250 to the main frame 210.

As described above, when the cover frame 250 and the main frame 210 are coupled to each other, the support ribs 254 disposed on the inner surface of the cover frame 250 may support the electrode leads 155 joined through the welding.

As described above, in this embodiment, since there is no need for the additional medium such as the busbar to join the electrode leads 155 of the battery cells 150 of the cell assembly 100 when electrically connecting the electrode leads 155, it may be possible to reduce the cost due to the omission of the busbar, further increase the energy density of the battery module 10, and realize the battery module 10 of a slimmer structure.

Furthermore, in this embodiment, since the support ribs 254 of the cover frame 250 support the electrode leads 155 joined to each other in the frame assembly 200, it may be possible to effectively ensure the coupling stability of the electrode leads 155.

Referring back to FIGS. 1 and 2, the battery module 10 may include a side plate 300 and the top plate 400.

A pair of side plates 300 may be provided, and cover the sides of the battery module 10. The pair of side plates 300 may accommodate the cell assembly 100 when coupled to the frame assembly 200 and the top plate 400 as described below.

The top plate 400 may cover the upper surface of the cell assembly 100. The top plate 400 may be formed with a corrugated shape having convex regions and concave regions in an alternating manner to increase the heat dissipation performance of the cell assembly 100.

Additionally, the top plate 400 may have accommodation grooves in the inner surface to allow the insertion of the battery cells 150 of the cell assembly 100 to support the cell assembly 100 more stably.

Although not shown, the battery module 10 may further include a bottom plate to support the bottom of the cell assembly 100. The bottom plate, the side plate 300 and the top plate 400 may form a module case structure together with the frame assembly 200 to accommodate the cell assembly 100.

In addition to the module case structure through the coupling of the top plate 400, the side plate 300 and the bottom plate, the module case structure may have any other module case structure, for example, a mono frame or a U-shaped frame. Additionally, the module case structure is not limited thereto, and may have a structure of any other shape for forming the module case structure of the battery module 10.

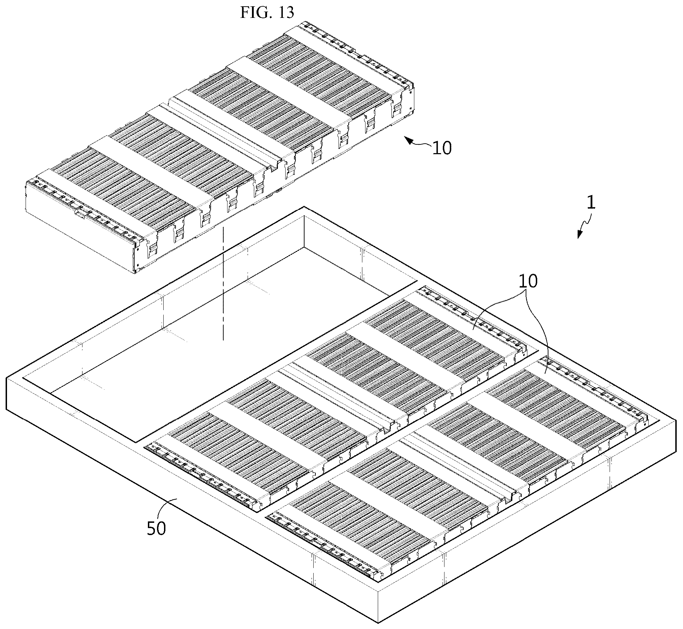

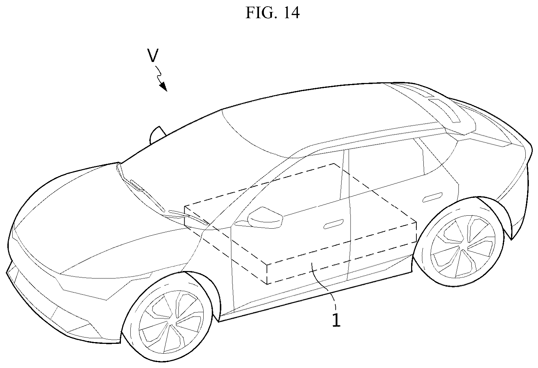

FIG. 13 is a diagram illustrating a battery pack 1 according to an embodiment of the present disclosure, and FIG. 14 is a diagram illustrating a vehicle V according to an embodiment of the present disclosure.

Referring to FIGS. 13 and 14, the battery pack 1 may include at least one battery module 10 of the previous embodiment and a pack case 50 accommodating the at least one battery module 10.

The battery pack 1 may further include an electrical component such as a battery management system (BMS) to control the at least one battery module 10 or a cooling unit such as a heat sink to cool down the at least one battery module 10.

In this embodiment, since the battery pack 1 includes the at least one battery module 10, it may be possible to reduce the manufacturing cost of the battery pack 1, and provide a slimmer structure and high energy density.

The battery pack 1 may be provided in the vehicle V as a fuel source of the vehicle. For example, the battery pack 1 may be provided in the vehicle V such as an electric vehicle, a hybrid electric vehicle and any other application using the battery pack 1 as a fuel source.

Additionally, in addition to the vehicle V, the battery pack 1 may be provided in any other instrument, apparatus and equipment using secondary batteries, for example, Energy Storage Systems.

In the case of this embodiment, since the battery pack 1 has the compact structure with high energy density, when mounted in the vehicle V, it may be easy to form a modularization structure of the battery pack 1, and it may be possible to ensure higher degree of freedom in mounting in various internal space shapes of the vehicle V.

According to the above-described embodiments, it may be possible to provide the battery module 10 having electrical connection of the electrode leads 155 of the battery cells 150 with lower manufacturing cost and higher energy density, and the battery pack 1 and the vehicle V including the same.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

The terms indicating directions such as upper, lower, left, right, front and rear are used for convenience of description, but it is obvious to those skilled in the art that the terms may change depending on the position of the stated element or an observer.

Preferred embodiments of the Invention are specified in the following items:
Item 1. A battery module, comprising:
   a cell assembly including a plurality of battery cells; and
   a frame assembly covering at least one side of the cell assembly, and configured to guide direct connection between electrode leads of adjacent battery cells.
Item 2. The battery module according to Item 1, wherein the electrode leads of the adjacent battery cells are directly joined to each other without an additional medium for connection in the frame assembly.
Item 3. The battery module according to Item 1, wherein the frame assembly includes:
   a main frame covering the at least one side of the cell assembly, and allowing the electrode leads of the battery cells to pass therethrough; and
   a cover frame covering the main frame, and supporting the electrode leads passing through the main frame.
Item 4. The battery module according to Item 3, wherein the main frame includes:
   a frame body covering at least one side of the cell assembly;
   a plurality of lead slots disposed in the frame body, and allowing the electrode leads to pass therethrough; and
   a plurality of guide spacers disposed in between the plurality of lead slots, and forming a predetermined space in a heightwise direction of the frame body.
Item 5. The battery module according to Item 4, wherein the plurality of guide spacers allows insertion of detachable lead joint jigs in the direct connection of the electrode leads of the adjacent battery cells, wherein the lead joint jigs guide the direct connection of the electrode leads.
Item 6. The battery module according to Item 4, wherein the cover frame includes:
   a cover body covering the main frame; and
   a plurality of support ribs disposed on an inner surface of the cover body, and supporting the electrode leads of the battery cells passing through the lead slots.
Item 7. The battery module according to Item 6, wherein the cover frame includes a plurality of protruding ribs formed in the cover body, wherein the protruding ribs are inserted into two end portions of the plurality of guide spacers in the heightwise direction of the cover body.
Item 8. The battery module according to Item 6, wherein the cover body is made of an insulation material.
Item 9. The battery module according to Item 6, wherein the plurality of support ribs comes into surface contact with the joined electrode leads of the battery cells passing through the lead slots.
Item 10. The battery module according to Item 6, wherein the plurality of support ribs includes:
   a first support portion disposed on the inner surface of the cover body; and
   a second support portion bending from two end portions of the first support portion and extending to a predetermined length.
Item 11. The battery module according to Item 10, wherein the first support portion comes into surface contact with the joined electrode leads of the battery cells passing through the lead slots.
Item 12. A battery pack, comprising:
   at least one battery module according to Item 1; and
   a pack case accommodating the at least one battery module.
Item 13. A vehicle comprising at least one battery pack according to Item 12.

## Claims

1. A battery module, comprising:
a cell assembly including a plurality of battery cells arranged in stack and electrically connected through electrical connection of electrode leads; and
a frame assembly covering at least one side of the cell assembly, and configured to guide direct connection between electrode leads of adjacent battery cells.

2. The battery module according to claim 1, wherein the electrode leads of the adjacent battery cells are directly joined to each other without an additional medium for connection in the frame assembly.

3. The battery module according to claim 1, wherein the frame assembly includes:
a main frame covering the at least one side of the cell assembly, and allowing the electrode leads of the battery cells to pass therethrough; and
a cover frame covering the main frame, and supporting the electrode leads passing through the main frame.

4. The battery module according to claim 3, wherein the main frame includes:
a frame body covering at least one side of the cell assembly;
a plurality of lead slots disposed in the frame body, and allowing the electrode leads to pass therethrough; and
a plurality of guide spacers disposed in between the plurality of lead slots, and forming a predetermined space in a heightwise direction of the frame body.

5. The battery module according to claim 4, wherein the plurality of guide spacers allows insertion of detachable lead joint jigs in the direct connection of the electrode leads of the adjacent battery cells, wherein the lead joint jigs guide the direct connection of the electrode leads.

6. The battery module according to claim 4, wherein the cover frame includes:
a cover body covering the main frame; and
a plurality of support ribs disposed on an inner surface of the cover body, and supporting the electrode leads of the battery cells passing through the lead slots.

7. The battery module according to claim 6, wherein the cover frame includes a plurality of protruding ribs formed in the cover body, wherein the protruding ribs are inserted into two end portions of the plurality of guide spacers in the heightwise direction of the cover body.

8. The battery module according to claim 6, wherein the cover body is made of an insulation material.

9. The battery module according to claim 6, wherein the plurality of support ribs comes into surface contact with the joined electrode leads of the battery cells passing through the lead slots.

10. The battery module according to claim 6, wherein the plurality of support ribs includes:
a first support portion disposed on the inner surface of the cover body; and
a second support portion bending from two end portions of the first support portion and extending to a predetermined length.

11. The battery module according to claim 10, wherein the first support portion comes into surface contact with the joined electrode leads of the battery cells passing through the lead slots.

12. A battery pack, comprising:
at least one battery module according to claim 1; and
a pack case accommodating the at least one battery module.

13. A vehicle comprising at least one battery pack according to claim 12.
